# FASCICULE DE BREVET EUROPEEN

(11) **EP 3 362 619 B1**
(45) Date de publication et mention de la délivrance du brevet: **15.04.2020**
(21) Numéro de dépôt: 16791057.9
(22) Date de dépôt: 14.10.2016
(51) Int. Cl.: E04H 4/14, B66B 9/00, E04H 4/16

(54) **DISPOSITIF D'EXTRACTION D'UN APPAREIL NETTOYEUR DE PISCINE**
VORRICHTUNG ZUR EXTRAKTION EINES SCHWIMMBECKENREINIGERS
DEVICE FOR EXTRACTING A SWIMMING POOL CLEANING APPARATUS

(30) Priorité: 14.10.2015 FR 1559779
(43) Date de publication de la demande: 22.08.2018
(73) Titulaire: Zodiac Pool Care Europe, 69500 Bron (FR)
(72) Inventeur: PICHON, Philippe, 31800 Villeneuve de Riviere (FR); BLANC TAILLEUR, Philippe, 31400 Toulouse (FR); DUFFAUT, Simon, 31780 Castelginest (FR)
(74) Mandataire: Ipside
(86) Numéro de dépôt international: PCT/FR2016/052655
(87) Numéro de publication internationale: WO 2017/064433

(56) Documents cités:
- EP-A1- 2 860 329
- WO-A1-03/087501
- WO-A2-2012/135538
- US-A1- 2011 067 615
- US-A1- 2014 263 087

## Description

La présente invention relève du domaine des équipements pour piscines. Elle concerne plus particulièrement un dispositif d'extraction ou de mise à l'eau d'un appareil de nettoyage de piscine.

### Préambule et art antérieur

L'invention concerne un équipement facilitant la mise en œuvre d'un appareil nettoyeur de surface immergée dans un liquide, telle qu'une surface formée par les parois d'un bassin, notamment d'une piscine. Un tel appareil nettoyeur est communément un robot mobile de nettoyage de piscine. Ces robots de piscine sont venus remplacer la corvée régulière, sinon quotidienne, de nettoyage du fond et des parois d'un bassin de piscine, à laquelle les utilisateurs de piscine étaient astreints précédemment.

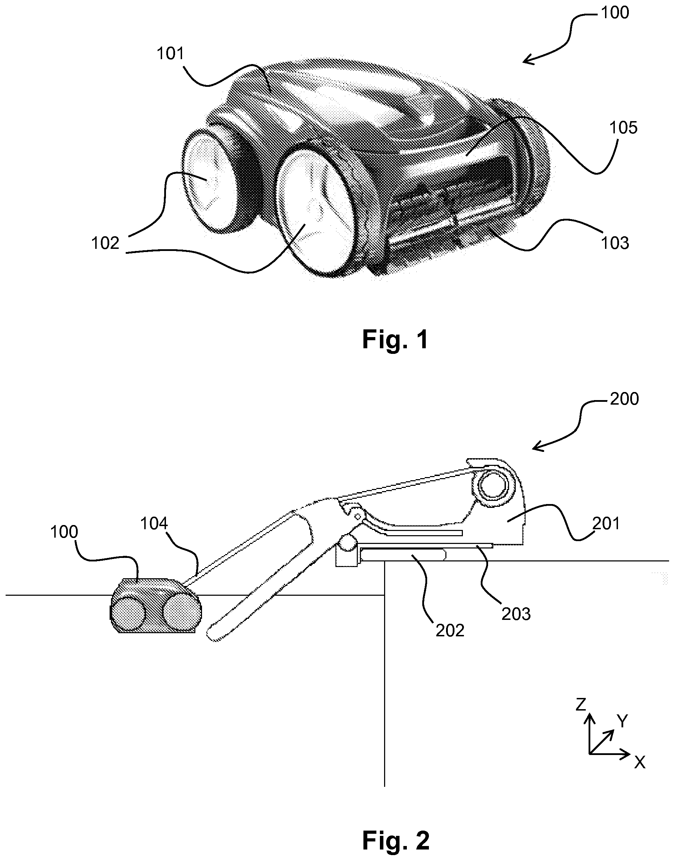

De tels robots de nettoyage de piscine parcourent, le fond et éventuellement les parois latérales d'un bassin de piscine, et en enlèvent les débris, poussières ou particules collées aux parois grâce à des brosses et à un circuit d'aspiration d'eau comportant un filtre. Leur parcours au fond du bassin est automatique, et optimisé pour nettoyer la surface complète lors d'un cycle de nettoyage d'environ une à deux heures. Ces robots autonomes ont apporté un confort significatif aux utilisateurs de piscines. Un robot de piscine de l'art antérieur, conforme à ce qui vient d'être décrit est illustré en figure 1.

A intervalles réguliers, ou généralement en fin de cycle de nettoyage, il reste nécessaire de sortir le robot de nettoyage du bassin, par exemple pour nettoyer le filtre ou pour ranger le robot lorsque celui-ci n'est pas utilisé. Par ailleurs, des études montrent que les robots sont généralement sortis par l'utilisateur pour des raisons de gène à la nage ou par crainte du couple eau/électricité.

L'extraction du robot de nettoyage pose fréquemment des problèmes pour l'utilisateur, notamment de temps consacré à l'extraction et au rangement du robot qui peut durer plus d'une dizaine de minutes, d'important efforts à produire pour soulever le robot liés majoritairement au volume d'eau contenu, ainsi que d'enroulement du câble sur lui-même, ou encore d'encombrement lorsque le robot de nettoyage est extrait de l'eau. Plus le filtre doit être lavé souvent, plus le problème devient aigu. Enfin, le fait de devoir sortir le robot de nettoyage de son rangement habituel, le mettre à l'eau, puis le sortir de l'eau en fin de cycle et le ranger conduisent, dans la pratique, de nombreux utilisateurs à réduire leur utilisation du robot. Il est donc souhaitable de doter de tels robots de nettoyage d'une autonomie encore plus grande, notamment en ce qui concerne l'entrée ou l'extraction du bassin.

On connait, pour tenter de résoudre ce problème, des dispositifs de rangement d'un robot de piscine, tels que par exemple décrits dans la demande de brevet FR 2 742 351 déposée en décembre 1995. Dans ce système, un dispositif d'extraction de robot de nettoyage comporte une grue en position verticale dotée à son extrémité d'un crochet destiné à venir coopérer avec un anneau porté sur un robot de nettoyage afin de le hisser en dehors du bassin.

Un tel système est néanmoins peu pratique d'utilisation, requérant une certaine dextérité de la part de l'utilisateur, le crochet de la grue devant coopérer avec l'anneau du robot lorsque celui-ci se trouve au niveau de la ligne d'eau. Par ailleurs, ce dispositif d'extraction est adaptable qu'à un nombre limité de robots portant un crochet de façon à pouvoir être extrait de l'eau par la grue. Enfin, l'utilisateur doit être présent tout le temps de l'opération, y compris lors de la remise en eau du robot de nettoyage.

On connait également un dispositif d'extraction de robot de nettoyage de piscine tel que celui décrit dans la demande de brevet EP 2 860 329. Un tel dispositif comprend une interface d'interaction telle qu'un support configuré pour être couplé avec le robot de nettoyage et un élément manipulateur dudit robot tel qu'un bras mécanique relié audit support et configuré pour déplacer ledit support entre une position dans laquelle le robot est dans la piscine et une position dans laquelle le robot est en dehors de la piscine. Un tel dispositif comporte un sérieux inconvénient d'encombrement de la piscine notamment par le support et également par le bras mécanique dont au moins une partie reste positionné dans l'eau.

On connait aussi un dispositif de stockage de robot de nettoyage de coque de navire tel que celui décrit dans la demande de brevet US 2011/0067615. Ce dispositif comprend un compartiment de rangement du robot et un système de rotation pour entrainer en rotation ledit compartiment par rapport au navire entre une position inclinée de largage/récupération du robot et une position de stockage.

On connait également la demande de brevet internationale WO 2012/135538 qui divulgue un dispositif d'accès à un bassin d'une piscine utilisé pour déplacer une personne handicapée entre la terrasse d'une piscine et l'intérieur du bassin. Ce dispositif d'accès au bassin comprend un châssis de support et un siège relié au châssis de support par un bras monté sur le châssis par l'intermédiaire d'une liaison pivot. Ce dispositif comprend également des moyens de commande configurés pour mettre le bras en mouvement entre une position repliée dans laquelle le siège est suspendu au dessus de la terrasse de piscine de façon écartée du bassin et une position déployée dans laquelle le siège est suspendu dans le bassin ou au-dessus du bassin.

L'invention a notamment pour but de remédier à certains des inconvénients précités.

### Exposé de l'invention

L'invention vise sous un premier aspect un dispositif d'extraction de robot de nettoyage de piscine.

Le dispositif d'extraction est défini par la revendication 1 ci-jointe et comporte :
- un châssis de support,
- un plateau déployable au-delà du châssis de support et en dessous de celui-ci,
- des moyens de commander le déploiement du plateau.

On comprend que le plateau est destiné à être disposé de façon à avoir un de ses bords longitudinaux disposé sensiblement sur le bord du châssis de support et l'autre bord placé en dessous de la surface d'eau dans le bassin de la piscine.

Le plateau a une forme générale plane et est doté d'une rigidité suffisante pour supporter le poids du robot de nettoyage lors de l'extraction du robot de la piscine. En d'autres termes, lorsque le robot de nettoyage est positionné sur le plateau, celui-ci maintient sa forme générale plane.

Le plateau comprend une surface de roulage destinée au roulage du robot de nettoyage lors de l'extraction ou de l'entrée dans la piscine du robot de nettoyage.

Selon un mode particulier de réalisation de l'invention, le plateau déployable est un plan, le dispositif comporte des moyens de mouvoir ledit plateau entre une position rétractée dans laquelle ledit plateau est sensiblement horizontal et vient se placer au dessus d'un châssis de support et une position déployée, dans laquelle le plateau déborde du châssis et est incliné vers l'extérieur de celui-ci.

Dans un autre mode de réalisation, correspondant au cas d'un robot de piscine du type alimenté en énergie par un câble souple attaché au corps du robot, par exemple en sa partie avant supérieure, le dispositif d'extraction comporte également un enrouleur de câble, et des moyens de commander l'enrouleur de câble. Dans cette configuration, l'extraction du robot de nettoyage est facilitée en s'aidant d'une traction imprimée au câble d'alimentation.

Dans un mode de réalisation particulier, le dispositif d'extraction comporte des moyens de commander le retour du robot de nettoyage vers la zone d'extraction.

De cette manière, le châssis de support et le plateau facilitent l'extraction ou le déploiement du robot de nettoyage, soulageant ainsi, lors de l'extraction, l'effort exercé sur le câble d'alimentation du robot. Par ailleurs, le câble d'alimentation forme alors un moyen de ramener le robot de nettoyage vers la zone d'extraction, sur commande de l'utilisateur.

Dans un mode particulier de réalisation, le plateau est amovible, et le dispositif comporte un châssis supportant l'enrouleur de câble, et des moyens de mouvoir le plateau entre une position rétractée dans laquelle le plateau est sensiblement horizontal et vient se placer au dessus du châssis, et une position déployée, dans laquelle le plateau déborde du châssis et est incliné vers l'extérieur de celui-ci. Alternativement, le plateau forme un chemin incurvé tel que l'angle entre les surfaces tangentes à ses deux extrémités est compris entre environ 15 et 100°. Cette situation correspond au cas où le plan vient se poser contre la paroi verticale du bassin, et où la margelle du bord de la piscine déborde vers l'intérieur du bassin.

Dans un mode de réalisation, le plateau est disposé de façon fixe entre le rebord de la piscine et l'intérieur de celle-ci, éventuellement jusqu'à venir reposer sur la paroi verticale interne du bassin. Dans le cas d'un angle de 90°, la surface de roulage vient ainsi affleurer la paroi latérale du bassin en une de ses extrémités, et est parallèle au plan du sol autour de la piscine en son autre extrémité, après basculement.

Un robot de nettoyage du type adapté à nettoyer également les parois latérales du bassin est alors en mesure de s'engager sur la surface de roulage du plateau, tout en étant tracté par le câble souple, et de venir ainsi, en suivant ce chemin, émerger du bassin et s'arrêter, à l'horizontale, près du bord de celui-ci.

Dans un mode particulier de réalisation, le châssis supporte l'enrouleur de câble, et le dispositif d'extraction comporte des moyens de guidage du plateau lors du déplacement de celui-ci entre sa position repliée et sa position déployée.

Dans un mode de réalisation permettant la connexion du câble à une unité d'alimentation et de programmation, l'enrouleur de câble permet la sortie d'une extrémité du câble en cours d'enroulement par le moyeu dudit enrouleur.

Dans un autre mode de réalisation de l'invention, le robot est alimenté par des batteries embarquées et un système solidaire du plateau peut permettre l'accrochage d'un moyen de préhension situé sur le robot, afin de positionner le robot sur le plateau et de l'y maintenir pendant la phase d'extraction du robot de la piscine. Ce système solidaire du plateau est notamment utilisé lorsque le robot ne dispose plus d'une énergie suffisante pour venir se positionner de lui-même sur le plateau du dispositif d'extraction.

L'invention vise, sous un second aspect, un dispositif de nettoyage de bassin de piscine, caractérisé en ce qu'il comprend un robot de nettoyage et un dispositif d'extraction tel qu'exposé.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :
La figure 1 illustre une vue en perspective d'un appareil de nettoyage de piscine selon l'art antérieur,
La figure 2 est une vue de côté très schématisée des éléments du dispositif, y compris un robot de nettoyage, celui-ci étant disposé dans le bassin de la piscine,
La figure 3 est une vue en perspective des éléments composant un dispositif d'extraction de robot de piscine, sans robot de nettoyage ou câble d'enroulement,
La figure 4 est une représentation schématique de la cinématique de déplacement du plateau sur le châssis de support,
La figure 5 est une vue en perspective des mêmes éléments, le robot de nettoyage et le câble d'enroulement étant représentés.

### Description détaillée d'un mode de réalisation de l'invention

L'invention trouve sa place au sein d'un environnement de piscine, par exemple une piscine enterrée de type familial.

Comme on le voit en figure 1 déjà citée, un robot de nettoyage **100** de piscine tel qu'envisagé ici de façon non limitative comprend un corps **101,** des moyens de déplacement (roues, chenilles etc.) **102,** au moins une brosse de nettoyage **103,** et un circuit d'aspiration et filtrage d'eau (non visible sur la figure) comportant au moins une hélice mue par un moteur (également non visibles sur la figure). Les moyens de déplacement 102 sont commandables indépendamment les unes des autres, de manière à permettre d'orienter librement le robot de nettoyage sur les parois de la piscine, en marche avant ou en marche arrière. Le moteur du circuit de filtration est également commandable en marche / arrêt et éventuellement en puissance d'aspiration.

On définit pour la suite de la description un repère XᵣYᵣZᵣ relatif à ce robot, dans lequel :
- un axe longitudinal Xᵣ est défini comme l'axe de déplacement du robot lorsque les roues de déplacement 102 sont commandées à se mouvoir de façon identique,
- un axe transversal Yᵣ est défini comme perpendiculaire à l'axe longitudinal Xᵣ, et situé dans un plan parallèle au plan d'appui des moyens de déplacement 102 du robot, cet axe latéral Yᵣ étant ainsi parallèle à l'axe de rotation des roues,
- un axe vertical Zᵣ est défini comme perpendiculaire aux deux autres axes.

Les notions d'avant, arrière, gauche, droite, haut, bas, supérieur, inférieur, etc. relatives au robot de nettoyage sont définies par rapport à ce repère XᵣYᵣZᵣ.

Dans le présent exemple de réalisation, le robot de nettoyage 100 considéré comporte une cheminée de sortie du circuit de filtration d'eau orientée de façon inclinée par rapport à la verticale Zᵣ. De la sorte, le flux d'eau chassé en sortie du circuit de filtration a tendance à favoriser l'avancement du robot lors de ses déplacements. Dans une variante, la cheminée de sortie d'eau est orientée selon l'axe vertical Zᵣ.

Dans le présent exemple, le robot de nettoyage 100 est alimenté en énergie et en commandes au moyen d'un câble souple **104.** Ce câble souple 104 est, ici, attaché au corps 101 du robot 100 en sa partie avant supérieure. Ce câble souple 104 est relié, en son autre extrémité, à une unité d'alimentation et de programmation (non illustrée sur la figure 1), disposée à l'extérieur du bassin, cette unité d'alimentation et de programmation étant elle-même reliée au courant électrique sur le secteur.

Le robot de nettoyage 100 émet et reçoit également éventuellement des données, de et vers l'unité d'alimentation et de programmation.

Le câble souple 104, d'une longueur d'une dizaine de mètres environ, est usuellement d'un diamètre d'environ un centimètre, et sa rigidité est suffisante pour permettre à un utilisateur de s'aider dudit câble souple 104 pour ramener le robot de nettoyage 100 vers lui lorsqu'il faut extraire le robot de la piscine.

Le robot de nettoyage 100 comporte en outre, dans le présent exemple, une poignée de préhension **105** adaptée à permettre à un utilisateur de sortir le robot de l'eau. Dans un mode particulier de réalisation, le robot de nettoyage comporte des moyens permettant le vidage rapide de l'eau contenue dans sa chambre interne de filtration lorsqu'il est extrait de l'eau.

Le robot de nettoyage 100 comporte, ici en sa partie supérieure, un capot ouvrant **106** permettant à un utilisateur d'accéder au filtre de la chambre de filtration, pour nettoyer celui-ci lorsque cela se révèle nécessaire.

Le robot de nettoyage 100, ici considéré, est d'une largeur d'environ quarante centimètres, d'une longueur sensiblement égale, et d'une hauteur d'environ vingt centimètres. Son poids à vide est de l'ordre de dix kg, et d'environ 25 kg lorsqu'il sort de l'eau avec sa chambre de filtration non vidée.

Toutes ces dimensions et valeurs sont données ici à titre d'exemple non limitatif, de manière à apprécier le dimensionnement d'un dispositif d'extraction / déploiement de ce robot de nettoyage 100.

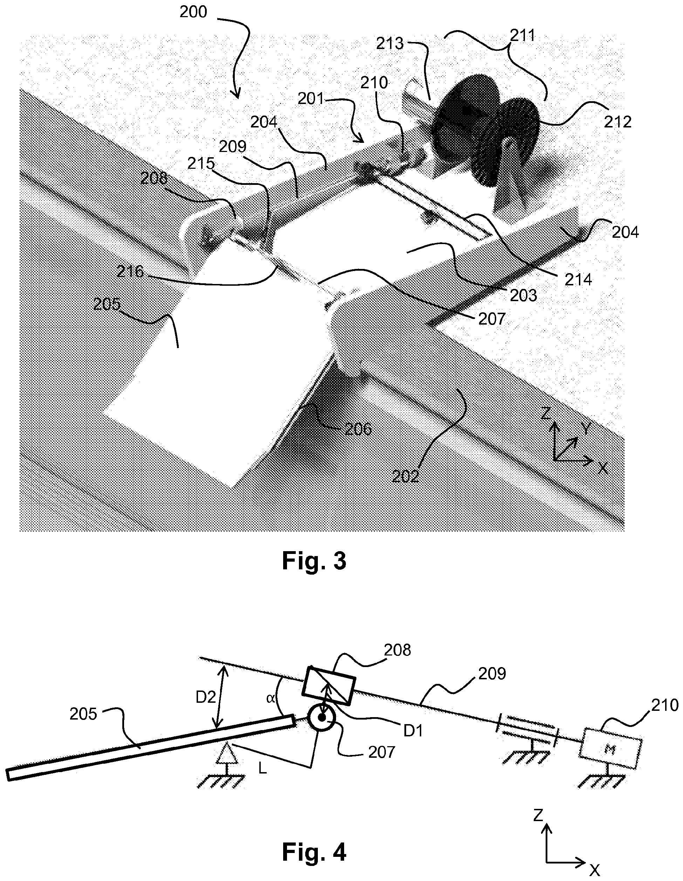

Tel qu'on le voit, illustré de façon simplifiée dans un exemple de réalisation non limitatif, sur les figures 2 et 3, un dispositif d'extraction **200** de robot de nettoyage 100 de piscine comporte, en premier lieu, un châssis de support **201,** destiné à venir prendre appui sur le rebord **202** d'un bassin de piscine. Ce châssis de support 201 est, dans le présent exemple nullement limitatif, un plateau **203** rectangulaire de 60 à 80 cm de longueur, doté de deux bords de guidage latéraux **204** sensiblement verticaux. Ces bords de guidage latéraux 204 présentent ici une hauteur d'environ 15 centimètres.

On définit de même pour la suite de la description un repère XYZ relatif à ce châssis, dans lequel :
- un axe longitudinal X est défini comme parallèle à la longueur du châssis 201,
- un axe transversal Y est défini comme perpendiculaire à l'axe longitudinal et situé dans le plan du sol autour du châssis 201,
- un axe vertical Z est défini comme perpendiculaire aux deux autres axes.

Les notions d'avant, arrière, gauche, droite, haut, bas, supérieur, inférieur, etc. relatives au châssis de support 201 sont définies par rapport à ce repère XYZ.

Ce châssis de support 201 accueille un plateau **205,** rectangulaire, sensiblement plan, d'une longueur inférieure à la longueur du châssis mais voisine de celle-ci. La largeur du plateau 205 est inférieure ou égale à la largeur du châssis de support 201, mais voisine de celle-ci. Le plateau 205 peut donc venir prendre place au dessus du châssis.

Le plateau 205 est mobile entre deux positions. 1/ Dans une première position (non illustrée sur les figures), dite repliée, le plateau 205 est positionné au dessus du châssis de support 201, sensiblement parallèlement à celui-ci.

2/ Dans une deuxième position, dite déployée, le plateau 205 est, au contraire, disposé, relativement au châssis 201, en surplomb au dessus du bout le plus proche du bassin de la piscine. Le plateau 205 est, dans cette position déployée, incliné d'une valeur de pente comprise entre 10 et 100 degrés vis à vis de l'horizontale. Comme on le voit sur les figures 2 et 3, dans cette position déployée, le plateau 205 est disposé de telle sorte qu'un de ses bords longitudinaux est disposé dix à vingt centimètres sous la surface de l'eau dans le bassin de la piscine. L'inclinaison du plateau 205 vis à vis de la verticale est, dans le présent exemple, réglable entre 0 et 100°.

Le plateau 205 est, dans le présent exemple de réalisation, doté de glissières **206** sur ses bords latéraux, lesdites glissières venant coopérer avec des ergots formant guides (non visibles sur les figures) montés sur la face intérieure des bords latéraux 204 du châssis.

La cinématique du plateau 205 vis à vis du châssis de support 201 est alors illustrée par la figure 4. Comme on le voit sur cette figure donnée ici à titre d'exemple non limitatif, le plateau 205 est solidarisé à travers une liaison rotative **207** à un chariot **208** mobile le long d'une vis sans fin **209** orientée à environ 10° au dessus de l'axe longitudinal X. Cette vis sans fin 209 est mue par un moteur électrique **210.** La distance D1 entre la vis sans fin et la liaison rotative 207 est inférieure à la distance D2 entre la vis sans fin et les ergots de guidage latéraux du plateau 205. La distance entre les ergots de guidage et la liaison rotative, selon l'axe de la vis sans fin 209, est notée L.

De la sorte, lorsque la vis sans fin 209 est entraînée en rotation par le moteur électrique 210, elle entraîne le déplacement longitudinal du chariot 208, et, par là, l'avancée du plateau 205 hors du châssis de support 201.

La position relative des ergots de guidage et du chariot détermine l'angle du plateau 205 avec l'axe de la vis sans fin 209 selon tan(a) = (D2-D1)/L. On comprend que l'angle maximum et minimum d'inclinaison de plateau 205 par rapport au châssis de support 201 peut ainsi être déterminé lors de la conception du dispositif d'extraction 200.

Comme on le voit sur la figure 3, dans le présent exemple de réalisation, le dispositif d'extraction et/ou de déploiement comporte en fait deux vis sans fin 209, disposées chacune le long d'un bord latéral 204 du châssis. Ces deux vis sans fin 209 sont entraînées par un même moteur 210, à travers une courroie de transmission **214.**

Le plateau 205 comporte également, dans le présent exemple, une butée **216** perpendiculaire à son plan principal, disposée au milieu de son extrémité la plus proche de la liaison rotative 207. Cette butée 216 est destinée à former une limite de déplacement pour le robot de nettoyage 100 sur ledit plateau 205.

Le châssis de support 201 comporte, par ailleurs, un enrouleur **211** de câble. Cet enrouleur 211 comprend une bobine **212** et un moteur d'entraînement **213.** La bobine 212 est orientée selon l'axe transversal Y.

Cet enrouleur 211 permet la sortie du câble souple 104 le long de son axe, de sorte que le câble puisse être relié en son extrémité distante du robot de nettoyage 100 à une unité d'alimentation et de programmation dudit robot de nettoyage.

Cet enrouleur 211 est solidarisé au plateau 203 du châssis de support 201, au niveau de son bord le plus éloigné du bassin.

Le plateau 205 supporte, en son bord longitudinal le plus proche de la liaison rotative 207, un guide câble **215,** disposé, selon l'axe longitudinal X, dans l'alignement du centre de la bobine 212. Ce guide câble 215 présente une hauteur, au dessus du plateau 205, d'environ 15 centimètres dans le présent exemple, cette dimension étant voisine de la hauteur du point d'attache du câble souple 104 au niveau du corps 101 du robot de nettoyage 100. Le guide câble 215 est destiné à orienter le câble souple 104 vers la bobine 212 lors de l'enroulement dudit câble souple.

Le dispositif d'extraction 200 comporte par ailleurs des moyens de commande du moteur d'entraînement 210 des vis sans fin 209 et de l'enrouleur 211.

Le dimensionnement et le choix des matériaux composant les divers éléments exposés plus hauts sont déterminés par les efforts à reprendre, et par les conditions d'environnement de la piscine.

### Mode de fonctionnement

L'extraction du robot peut être déclenchée soit automatiquement à la fin du cycle de nettoyage, soit manuellement par l'utilisateur par action sur l'unité d'alimentation et de commande du système d'extraction.

L'unité d'alimentation et de commande du système d'extraction est reliée à l'unité d'alimentation et de programmation du robot pour que la commande des moteurs du système d'extraction et de la commande des moteurs du robot soient réalisées de manière coordonnée.

Dans un mode de réalisation particulier, l'unité d'alimentation et de commande du système d'extraction et l'unité d'alimentation et de programmation du robot sont confondues.

Lorsqu'un robot de nettoyage 100 de piscine doit être extrait du bassin, le procédé d'extraction comprend les étapes suivantes :
Si le plateau 205 n'est pas initialement en position déployée avec son bord extérieur immergé d'une dizaine de centimètres environ, le système commande son déploiement en mettant en marche le moteur 210 d'entraînement des vis sans fin 209.

Puis, l'enrouleur 211 est mis en marche et commence à enrouler le câble souple 104 relié au robot de nettoyage 100 sur la bobine 212. Le robot 100 est ainsi ramené progressivement en direction du plateau 205, avec sa face avant orientée en direction du plateau.

Lorsque le robot 100 arrive à proximité immédiate du plateau 205, ses roues 102 prennent appui sur le plateau, et le robot avance par lui-même, ou est tracté par le câble souple 104 en cours d'enroulement, jusqu'à être totalement en appui sur ledit plateau. Il vient se bloquer contre la butée 216 dudit plateau 205.

A cet instant, les roues 102 du robot sont arrêtées (s'il était encore en commande de mouvement).

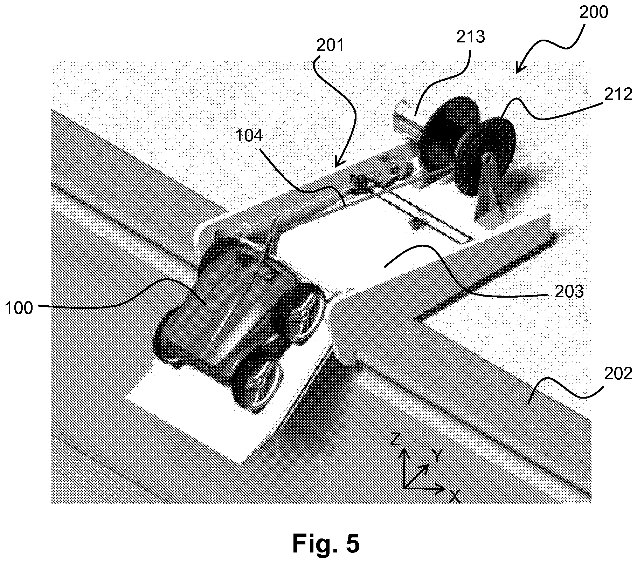

La situation est alors celle de la figure 5.

Puis, le moteur 210 entraînant les vis sans fin 209 est mis en marche, de manière à ramener le plateau 205 dans le châssis de support 201. Pendant ce temps, l'enrouleur 211 maintient une tension sur le câble souple de manière à retenir le robot 100 sur le plateau 205.

Dans le même temps, si le robot de nettoyage 100 est doté d'un dispositif de vidage rapide, celui-ci est activé pour réduire le poids de l'eau dans la chambre de filtration, et donc les efforts exercés sur le plateau par les vis sans fin 209.

Lorsque le plateau est complètement replié au sein du châssis 201, les moteurs des vis sans fin 209 et de l'enrouleur 211 sont arrêtés. Le robot est alors disponible pour une manipulation par l'utilisateur, par exemple pour un nettoyage du filtre, ou simplement pour rester ainsi en position de stockage avant une prochaine utilisation. Cette position de stockage, due à la mobilité du plateau et à sa rétractation à l'intérieur du dispositif, libère le bassin du dispositif d'extraction, ainsi que du robot de nettoyage, sans intervention active de l'utilisateur. Ainsi l'utilisateur peut disposer de la totalité de l'espace disponible pour la nage, tout en réduisant les risques de blessures dues à la présence d'éléments immergés.

De façon particulièrement avantageuse, le temps d'extraction du robot est relativement court, avantageusement inférieur ou égal à 5 minutes, préférentiellement inférieur ou égal à 2 minutes, l'utilisateur pouvant ainsi disposer du bassin pour la nage très rapidement.

La procédure de mise à l'eau du robot de nettoyage est exactement inverse de ce qui vient d'être décrit, le dispositif d'extraction faisant naturellement également office de dispositif de mise à l'eau.

## Revendications

1. Dispositif d'extraction (200) de robot de nettoyage (100) de piscine comportant :
- un châssis de support (201) destiné à venir prendre appui sur un rebord (202) d'un bassin de piscine,
- un plateau (205) déployable au-delà du châssis de support (201) et en dessous de celui-ci,
- des moyens de commander le déploiement dudit plateau (205),
ledit dispositif d'extraction (200) étant **caractérisé en ce que** le plateau (205) est mobile entre une première position dite repliée, dans laquelle ledit plateau (205) est positionné au-dessus du châssis de support (201), sensiblement parallèlement à celui-ci, et une deuxième position dite déployée, dans laquelle le plateau (205) est disposé en surplomb au-dessus du bord du châssis (201) le plus proche du bassin de piscine et est incliné d'une valeur de pente comprise entre 10 et 100° vis-à-vis de l'horizontale.

2. Dispositif d'extraction (200) selon la revendication 1, **caractérisé en ce que** le plateau déployable est un plan, et **en ce que** le dispositif comporte des moyens de mouvoir ledit plateau (205) entre la position repliée dans laquelle ledit plateau (205) est sensiblement horizontal et vient se placer au-dessus du châssis de support (201), et la position déployée, dans laquelle le plateau (205) déborde du châssis (201) et est incliné vers l'extérieur de celui-ci.

3. Dispositif d'extraction (200) selon la revendication 1, **caractérisé en ce que** le plateau (205) forme un chemin incurvé tel que l'angle entre les surfaces tangentes à ses deux extrémités est compris entre environ 15 et 100°.

4. Dispositif d'extraction (200) selon la revendication 2, **caractérisé en ce que** le dispositif comporte des moyens de guidage du plateau (205) lors du déplacement de celui-ci entre sa position repliée et sa position déployée.

5. Dispositif d'extraction (200) selon l'une quelconque des revendications 1 à 4, correspondant au cas d'un robot de nettoyage (100) de piscine du type alimenté en énergie par un câble souple attaché au corps du robot (100), **caractérisé en ce que** le dispositif comporte également un enrouleur de câble (211), et des moyens de commander l'enrouleur de câble (211).

6. Dispositif d'extraction (200) selon la revendication 5, **caractérisé en ce que** le dispositif comporte des moyens de commander le retour du robot de nettoyage (100) vers la zone d'extraction.

7. Dispositif d'extraction (200) selon l'une quelconque des revendications 5 ou 6, **caractérisé en ce que** le plateau (205) est amovible, et le dispositif comporte un châssis supportant l'enrouleur de câble (211), et des moyens de mouvoir le plateau (205) entre la position repliée dans laquelle le plateau (205) est sensiblement horizontal et vient se placer au-dessus du châssis, et une position déployée, dans laquelle le plateau déborde du châssis et est incliné vers l'extérieur de celui-ci.

8. Dispositif d'extraction (200) selon l'une quelconque des revendications 5 à 7, **caractérisé en ce que** le châssis supporte l'enrouleur de câble (211), et le dispositif (200) comporte des moyens de guidage du plateau (205) lors du déplacement de celui-ci entre sa position repliée et sa position déployée.

9. Dispositif d'extraction (200) selon l'une quelconque des revendications 5 à 8, **caractérisé en ce que** l'enrouleur de câble (211) permet la sortie d'une extrémité du câble en cours d'enroulement par le moyeu dudit enrouleur.

10. Dispositif de nettoyage de bassin de piscine, **caractérisé en ce qu'**il comprend un robot de nettoyage (100) et un dispositif d'extraction (200) selon l'une quelconque des revendications 1 à 9.

## Patentansprüche

1. Vorrichtung zum Herausziehen (200) eines Pool-Reinigungsroboters (100), umfassend:
- einen Tragrahmen (201), der dazu bestimmt ist, an einem Rand (202) eines Poolbeckens in Auflage zu kommen,
- eine Platte (205), die über den Tragrahmen (201) hinaus und unter denselben ausgefahren werden kann,
- Mittel zum Steuern des Ausfahrens der Platte (205), wobei die Herausziehvorrichtung (200) **dadurch gekennzeichnet ist, dass** die Platte (205) zwischen einer ersten, sogenannten eingeklappten Stellung, in der die Platte (205) über dem Tragrahmen (201), im Wesentlichen parallel zu demselben positioniert ist, und einer zweiten, sogenannten ausgefahrenen Stellung beweglich ist, in der die Platte (205) über die am nähesten am Poolbecken befindlichen Kante des Rahmens (201) überhängend angeordnet ist und um einen Steigungswert im Bereich zwischen 10 und 100° gegenüber der Horizontalen geneigt ist.

2. Herausziehvorrichtung (200) nach Anspruch 1, **dadurch gekennzeichnet, dass** die ausfahrbare Platte eine Ebene ist, und dadurch, dass die Vorrichtung Mittel zum Bewegen der Platte (205) zwischen der eingeklappten Stellung, in der die Platte (205) im Wesentlichen horizontal ist und sich über den Tragrahmen (201) legt, und der ausgefahrenen Stellung umfasst, in der die Platte (205) über den Rahmen (201) übersteht und zur Außenseite desselben geneigt ist.

3. Herausziehvorrichtung (200) nach Anspruch 1, **dadurch gekennzeichnet, dass** die Platte (205) einen gekrümmten Pfad bildet, derart, dass der Winkel zwischen den tangierenden Flächen an ihren zwei Enden im Bereich zwischen etwa 15 und 100° liegt.

4. Herausziehvorrichtung (200) nach Anspruch 2, **dadurch gekennzeichnet, dass** die Vorrichtung Mittel zum Führen der Platte (205) beim Verlagern derselben zwischen ihrer eingeklappten Stellung und ihrer ausgefahrenen Stellung umfasst.

5. Herausziehvorrichtung (200) nach einem der Ansprüche 1 bis 4, die dem Fall eines Pool-Reinigungsroboters (100) von dem Typ entspricht, der über ein biegsames, am Körper des Roboters (100) angebrachtes Kabel mit Energie versorgt wird, **dadurch gekennzeichnet, dass** die Vorrichtung ebenfalls eine Kabelaufwicklung (211) und Mittel zum Steuern der Kabelaufwicklung (211) umfasst.

6. Herausziehvorrichtung (200) nach Anspruch 5, **dadurch gekennzeichnet, dass** die Vorrichtung Mittel zum Steuern der Rückkehr des Reinigungsroboters (100) zum Herausziehbereich umfasst.

7. Herausziehvorrichtung (200) nach einem der Ansprüche 5 oder 6, **dadurch gekennzeichnet, dass** die Platte (205) abnehmbar ist, und die Vorrichtung einen Rahmen, der die Kabelaufwicklung (211) trägt, und Mittel zum Bewegen der Platte (205) zwischen der eingeklappten Stellung, in der die Platte (205) im Wesentlichen horizontal ist und sich über den Rahmen legt, und einer ausgefahrenen Stellung umfasst, in der die Platte über den Rahmen übersteht und zur Außenseite desselben geneigt ist.

8. Herausziehvorrichtung (200) nach einem der Ansprüche 5 bis 7, **dadurch gekennzeichnet, dass** der Rahmen die Kabelaufwicklung (211) trägt, und die Vorrichtung (200) Mittel zum Führen der Platte (205) bei der Verlagerung derselben zwischen ihrer eingeklappten Stellung und ihrer ausgefahrenen Stellung umfasst.

9. Herausziehvorrichtung (200) nach einem der Ansprüche 5 bis 8, **dadurch gekennzeichnet, dass** die Kabelaufwicklung (211) den Austritt eines Endes des Kabels, das gerade aufgewickelt wird, durch die Nabe der Aufwicklung ermöglicht.

10. Poolbecken-Reinigungsvorrichtung, **dadurch gekennzeichnet, dass** sie einen Reinigungsroboter (100) und eine Herausziehvorrichtung (200) nach einem der Ansprüche 1 bis 9 umfasst.

## Claims

1. Device (200) for extraction of a swimming pool cleaning robot (100) comprising:
- a support frame (201)designed to be supported on the rim (202) of a swimming pool;
- a plate (205) which can be deployed beyond the support frame (201) and below the latter;
- means for controlling the deployment of said plate (205),
said device (200) for extraction being **characterized in that** the plate (205) is mobile between a first position known as the retracted position, wherein said plate (205) is positioned above the support frame (201), substantially parallel to it, and a second position known as the deployed position, wherein the plate (205) is placed, relative to the frame (201), overhanging the closest end of the swimming pool and is inclined with a slope value between 10° and 100° relative to the horizontal.

2. Device (200) for extraction according to Claim 1, **characterized in that** the plate which can be deployed is a plane, and **in that** the device comprises means for moving the said plate (205) between the retracted position in which the said plate (205) is substantially horizontal and is placed above the support frame (201), and the deployed position, in which the plate (205) extends from the frame (201) and is inclined towards the exterior of the latter.

3. Device (200) for extraction according to Claim 1, **characterized in that** the plate (205) forms a curved path, such that the angle between the surfaces tangent to its two ends is between approximately 15 and 100°.

4. Device (200) for extraction according to Claim 2, **characterized in that** the device comprises means for guiding the plate (205) during its displacement between its retracted position and its deployed position.

5. Device (200) for extraction according to any one of Claims 1 to 4, corresponding to the case of a swimming pool cleaning robot (100) of the type which is supplied with energy by a flexible cable attached to the body of the robot (100), **characterized in that** the device also comprises a cable winder (211), and means for controlling the cable winder (211).

6. Device (200) for extraction according to Claim 5, **characterized in that** the device comprises means for controlling the return of the cleaning robot (100) to the extraction area.

7. Device (200) for extraction according to any one of Claims 5 or 6, **characterized in that** the plate (205) is detachable, and the device comprises a frame which supports the cable winder (211), and means for moving the plate (205) between the retracted position, in which the plate (205) is substantially horizontal and is placed above the frame, and a deployed position, in which the plate extends from the frame and is inclined towards the exterior of the latter.

8. Device (200) for extraction according to any one of Claims 5 to 7, **characterized in that** the frame supports the cable winder (211), and the device (200) comprises means for guiding the plate (205) when it is displaced between its retracted position and its deployed position.

9. Device (200) for extraction according to any one of Claims 5 to 8, **characterized in that** the cable winder (211) permits the output of an end of the cable during winding by the hub of the said winder.

10. Swimming pool cleaning device, **characterized in that** it comprises a cleaning robot (100) and a device (200) for extraction according to any one of Claims 1 to 9.
